# EUROPEAN PATENT APPLICATION

(11) **EP 2 127 528 A1**
(43) Date of publication of application: **02.12.2009**
(21) Application number: 09160323.3
(22) Date of filing: 15.05.2009
(51) Int. Cl.: A21D 13/00, A23D 7/005, A23G 3/34

(54) **Cup-Cake Toppers**

(30) Priority: 15.05.2008 US 53261 P; 04.05.2009 US 434699
(71) Applicant: General Mills, Inc., Minneapolis, MN 55440 (US)
(72) Inventor: Foehse, Karen B., Albuquerque, NM 87111 (US); Fittipaldi, Trish, Albuquerque, NM 87109 (US); Golaszewski, Robert R., New Hope, MN 55427-1141 (US)
(74) Representative: Vossius & Partner

(57) **Abstract**

The present invention relates to frosting or icing articles or cake toppers for baked goods that are sweet, shelf stable, ready-to-use, preformed, rigid or inflexible, three-dimensional, discrete or individual units for individual dessert servings such as cupcakes as well as their methods of preparation and use.
The frosting layer comprises 40-90 wt% sugar, 10-30 wt% shortening or fat, 0.5-10 wt% of moisture, has a thickness of 0.5-20 mm, and the confectionery composition has a softening temperature of 32-60°C.

## Description

The present invention relates to food products and to their methods of preparation and use. More particularly, the present invention relates to frosting or icing articles for baked goods that are sweet, shelf stable, ready-to-use, preformed, rigid or inflexible, three-dimensional, discrete or individual units for individual dessert servings such as cupcakes and muffins as well as their methods of preparation and use.

The present invention provides an improvement in consumer ready-to-spread ("RTS") frostings and their methods of preparation and use. More particularly, the present invention provides rigid frostings or topping articles in particular sheet forms or shapes that are intended to be placed as an individual whole unit upon a finished baked good. Upon modest heating (e.g., residual heat absorbed as the baked good cools or upon gentle reheating), the rigid form melts or softens to provide a finished baked good having a topping that resembles a hand applied icing or frosting layer.

Whether prepared at home, at bakeries for fresh sale, or in commercial production of longer shelf life products, baked goods often include a frosting or icing component. Icing can be used between layers in a cake as a filling, or can be used to completely or partially cover the outside of a cake or other baked product typically as a topping layer. "Icing" or "frosting" are the terms conventionally applied to a wide variety of spreadable, semi-solid confectionery products that are used as toppings to sweeten and decorate baked goods such as cakes, breads, cookies, and the like. Icings are generally un-aerated while frostings are aerated compositions.

Shelf stable ready-to-spread frostings are well known (See, for example, US 5,102,680 "Reduced Fat Ready-To-Spread Frosting" issued April 7, 1992 to Brian E. Glass et al.; or US 5,529,800 "Low Density Ready-To-Spread Frosting And Method Of Preparation "issued June 25, 1996 to Tricia J. Burns et al.). Generally, the frosting is in the form of an amorphous spreadable or plastic paste or butter disposed within a sealed moisture barrier tub.

Such soft unshaped icings and frostings can be applied with a spatula which can be used to impart patterns or textures for greater aesthetic appeal. Of course, frosting can be formed into shapes such as flowers and leaves using a pastry bag and decorative tip to form decorative shapes. Easily spreadable frostings typically do not work well for creating decorative components, due to their soft and sticky nature. Such decorations commonly adorn birthday or wedding cakes in addition to a layer of frosting. Food coloring is commonly added to icing mixtures to achieve the desired color. Sprinkles, coloring mist, or other decorations are often used on top of icing.

While an icing or frosting phase, especially involving decorations, can provide taste and decorative appeal, application of such toppings require time, and for complex decorations, high skill levels. Home consumers often are interested in products that require less preparation times and thus offer greater convenience. Cupcakes are especially labor intensive with respect to frosting application, since many individual units are involved. Also, especially for the at-home preparation of cup-cakes, the preparation involves the play-time participation or involvement of children. Often, children like to prepare cup-cakes and present a high quality appearing finished product but may have skill levels too low to prepare a satisfactory decorated baked good. Similar concerns regarding preparation time and skill levels affect retail bakeries as well as commercial mass production of finished baked goods.

Still another problem resides in the time necessary to allow a freshly baked good such as a layer cake or cup-cake to cool to lose any residual baking heat before applying a frosting. Home consumers are often in a hurry to complete their baking and frosting of a dessert baked good. However, if the baked good is not sufficiently cooled, then application of a conventional ready-to-spread frosting can undesirably result in tearing of the top surface of the cake to which the frosting is applied, or in the unacceptable melting of frosting due to excessive melting of a fat-based ingredient. Not only is the application experience frustrating to the consumer but can also result in a visually unappealing finished item. Often the consumer will place fault on the ready-to-spread frosting rather than their haste for any negative outcome.

It would therefore be desirable to provide a pre-formed icing or frosting item or article that can be quickly applied as a frosting or icing to a baked goods item. This application would not require a high level of skill to form a decorated frosted baked good product and would minimize the need for the time and labor-intensive icing applications.

It would also be desirable to provide a baked goods frosting item that allows immediate application of an icing or frosting to the entire top surface of a freshly baked cake dessert item in one step without need for complete cooling to room temperature. Surprisingly herein, the present invention not only allows for use of the preset frosting sheet articles with still warm freshly baked goods but also actually takes advantage of this warm condition. In addition, this premade frosting unit possesses a texture of a traditional ready-to-spread frosting.

It would also be desirable to provide such a frosting item for use not only in the home consumer application but also for bakery and food service applications or commercial mass production.

The baked goods art does include thin film or two dimensional articles adapted to apply quickly and easily a decoration to a baked good. Generally, a silk screen printing technique is used to print a picture or other graphic onto a release paper using an edible ink (See US 5,017,394 "Method For Making Edible Base Shapes Foodstuffs" issued May 21, 1991 to John W. Macpherson, Lee M. Acree) or other substrate such as a sugar paste (See, for example, US 5,334,404 "Process For Transferring Images of Edible Paste" issued Aug 2, 1994 to Ruben Garcia et al.) to form an article adapted to transfer the image to a food product surface. After drying, pictorial images are then silk screened onto the base shapes to produce the final edible image for decorating which can be placed directly onto an iced baked good, e.g., a cake with frosting, and eaten with the baked good. In variations, various printers are known for applying an image or graphic directly onto a food product (See, for example US 5,795,395 "Cake Decorating System And Method" issued Aug 18, 1998 to Ruth Ben-Matitayhu et al.).

Also, these flat pre-printed edible food decorations are generally intended for larger planar rectangular sheet cakes instead of small domed round cup-cakes. These edible food decorations are applied to a frosting layer that has already been spread onto the cake surface. They are not intended to be applied to an unfrosted cake, because they have minimal flavor and lack frosting-like quality.

The present frosting or icing three dimensional articles are thus to be distinguished from such thin, flat, flexible two-dimensional shapes or decorations. In the present invention, the articles provide not simply a graphic or image but an actual frosting or icing layer or coating as well as any two dimensional image applied thereto.

Shelf stable edible three dimensional sugar based cake decorations have also long been available. For example, a wide variety of cake decorations are available from Signature Brands, formerly Pioneer Products. These products are hard and unpalatable and are generally intended as mere decorative elements. The products are fabricated from fat free, dextrose based formulations intended to be dimensionally and microbiologically stable and while edible, are not organoleptically pleasing. These products are intended to be placed on top of a pre-applied frosting layer. They are not intended to form upon warming layers or topping that attempt to mimic traditional icing or frostings. Even when attempts are made to employ such products for such purposes, the products only soften minimally and insufficiently for use in the present methods of use.

The present articles are also to be distinguished from such three-dimensional decorative figurine shapes edible cake decoration comprising a sugar paste formulation described in US 6,432,461 "Edible Cake Decorations or Sculptures" issued Aug 13, 2002 to Derrick Stanley Dixon or in US Pat. App 10/635,350 2003 "Three-dimensional cake sculpture method and product filed Aug 6, 2003 by Debra L. Koplish

Thus, in view of the current state of the art, there is a continuing need for frosting or icing articles for baked goods that are sweet, edible, shelf stable, ready-to-use, preformed, rigid or inflexible, three-dimensional, discrete or individual units for individual dessert servings such as cupcakes as well as their methods of preparation and use.

In its article aspect, the present invention resides in a shelf stable sweet preformed, rigid or inflexible, three-dimensional frosting, icing, or chocolate-based article for use as a ready-to-use frosting layer for a finished baked good, comprising:
a thin rigid confectionery sheet fabricated from a dried frosting or icing or compound fat confectionery composition, comprising:
   a sugar(s) content of ≈40 - 90%;
   a shortening or fat content of ≈10 - 30%;
   a moisture content of ≈0.5-10%;
having a thickness ranging from ≈3-20 mm,
wherein the confectionery composition having a softening temperature ranging from ≈32-60°C.

In the method of use aspect of the one and same invention, the present invention resides in
forming a homogeneous warm thermoplastic fluid confection composition having a moisture content of about 10-15%;
forming said composition into a three dimensional shape having a thickness ranging from about 3-20 mm;
removing the three-dimensional shape from the mold; and
drying the shape to a moisture content of about 2-10% to form a ready-to-use frosting layer for a finished baked good.

In its method of preparation aspect, the present invention comprises the steps of providing a shelf stable sweet preformed, rigid or inflexible, three-dimensional frosting or icing article in sheet form having a thickness ranging from about 3-20 mm fabricated from a thermoplastic confectionery composition.
Applying the sheeted frosting article to the top surface of a finished baked good having a shape;
Warming the sheeted frosting article to soften the confectionery composition;
Allowing the warmed softened article to conform to the top surface shape of the baked good to form a finished baked dessert having a frosting layer conforming to the shape of the top surface shape;
Allowing the warmed softened article to cool to room temperature to form a finished dessert baked good.

Figure 1 is a photograph in perspective view of a cupcake with two toppers of the present invention positioned proximate the cup-cake.

Figure 2 is a photograph in perspective view of several finished frosted cupcake items prepared from the toppers of the present invention and prepared according to the methods of use herein.

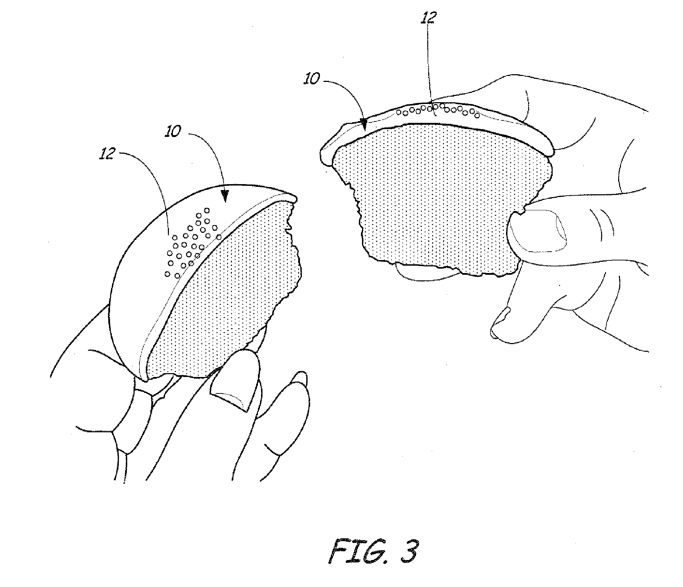

Figure 3 is a photograph in a perspective sectional view of one cupcake of Fig.2.

Figure 4 is a photograph in perspective view of a cupcake baking pan with six cupcakes each having a distinctive cup-cake topper of the present invention.

The present invention provides sweet, shelf stable, ready-to-use, preformed frosting units for individual dessert servings such as cupcakes referred to herein as "toppers". The structure and composition as well as preparation and use are described in detail below.

In the following preferred embodiments are summarized:
1. A shelf stable sweet preformed, rigid or inflexible, three-dimensional frosting or icing article for use as a ready-to-use frosting layer for a finished baked good, comprising:
   a thin rigid confectionery sheet fabricated from a dried confectionery composition, comprising:
      a sugar(s) content of about 40 to 90%;
      a shortening or fat content of about 10 to 30%;
      a moisture content of about 0.5-10%;
   having a thickness ranging from about 0.5-20 mm,
   wherein the confectionery composition having a softening temperature ranging from ≈ 90-140°F (32-60°C).
2. The article of item 1 wherein the sheet is in the form of a dome.
3. The article of item 2 having a round periphery.
4. The article of item 2 having a square or rectangular periphery.
5. The article of any of items 1 to 4 having a uniform thickness.
6. The article of any of items 1 to 5 having a piece weight ranging from about 10 to 40g.
7. The article of any of items 2 to 6 having an axis height of about 10 to 20mm.
8. The article of any of items 1 to 7 fabricated from a chocolate formulation.
9. The article of any of items 1 to 8 wherein the confectionery composition comprises:
   a sugar(s) content of about 50 to 90%;
   a shortening or fat content of about 10 to 30%; and,
   a moisture content of about 2-10%
10. A method of making a three-dimensional decoration, comprising the steps
   of forming a homogenous warm thermoplastic fluid confection composition having a moisture content of about 0.5-15%;
   forming said composition into a three dimensional dome shape having a thickness ranging from about 0.5-20 mm (preferably about 3-20 mm) by allowing to cool,
   removing the three-dimensional shape from the mold.
11. The method of item 10 wherein the thickness is uniform.
12. The method of item 11 wherein the dome shape includes a convex upper top surface and a concave lower surface.
13. The method of item 12 additionally comprising the step of:
   aerating the confection composition to a density of 0.7-1.2 g/cc prior to the forming step.
14. The method of item 13 additionally comprising the step of:
   drying the shape to a moisture content of about 2-10% to form a ready-to-use frosting layer for a finished baked good.
15. A method for preparing a baked good having a frosting or icing layer, comprising the steps of:
   providing a shelf stable sweet preformed, rigid or inflexible, three-dimensional confectionery article in sheet form having a thickness ranging from about 0.5-20mm (preferably about 3-20 mm) fabricated from a thermoplastic confectionery composition having a softening temperature ranging from 90-140°F (32-60°C);
   applying the sheeted frosting article to the top surface of a finished baked good having a shape;
   warming the sheeted frosting article to soften the confectionery composition; and,
   allowing the warmed softened article to conform to the top surface shape of the baked good to form a finished baked dessert having a frosting
   layer conforming to the shape of the top surface shape.
16. The method of item 15 additionally comprising the step of:
   allowing the warmed softened article to cool to room temperature to form a finished dessert baked good.
17. The method of item 16 wherein the warming step is practiced by applying the frosting article to a baked good still warm from baking.
18. The method of item 17 wherein the warming step is practiced by applying the frosting article to a cooled baked good to form a combination and reheating the combination.
19. The method of item 18 wherein the method is practiced in a commercial bakery.
20. A pre-packaged shelf stable food product kit containing at least one of a first food product having a defined shape and a second food product in dried form intended to be reconstituted with a liquid and/or other ingredients, the kit intended to be stored without refrigeration and the second food product intended to be utilized with the first food product and baked to form a baked good, comprising:
   an air-tight sealed container enclosing said first food product and said second food product, said container comprising:
      a bottom portion defining an upwardly open area,
      a plurality of side portions extending upwardly from the perimeter of said bottom portion, and
      a removable top portion enclosing said first and second food products;
      said first food product being supported by said container so as to retain its shape during storage and handling of said container;
      and said second food product being enclosed in a flexible sealed package positioned within said container;
      wherein the first food product is a thin rigid confectionery sheet as disclosed in any of items 1 to 9 above.
21. The kit of item 20 additionally including instruction for product preparation.
22. The kit of item 20 or 21 wherein the second food product is a dry mix for forming a batter after being admixed with liquid.
23. The kit of any of items 20 to 22 wherein the dry mix is for a cup-cake.
24. The kit of any of items 20 to 23 wherein the first food item is in the form of a dome having a convex upper top surface and a concave lower surface and has a circular perimeter having a diameter of ∼2.5-10cm.
25. A pre-packaged shelf stable food product mix kit comprising:
   an outer carton within which is a package of at least one of a first food product having a defined shape and useful as a cake topper and a second food product in dried form intended to be stored without refrigeration and the first food product intended to be utilized without further preparation and with the second food product after baking to form a baked good-for making or assembling a frosted ready-to-eat baked good, wherein the first food product is in the form of a thin rigid confectionery sheet as disclosed in any of items 1 to 9 above.
26. The kit of item 25 additionally including instruction for product preparation.
27. The kit of item 25 or 26 wherein the second food product is a dry mix for forming a batter after being admixed with liquid.
28. The kit of any of items 25 to 27 wherein the dry mix is for a cup-cake.
29. The kit of any of items 25 to 28 wherein the first food item is in the form of a dome having a convex upper top surface and a concave lower surface and has a circular perimeter having a diameter of ∼2.5-10cm.

Throughout the specification and claims, percentages are by weight and temperatures in degrees Centigrade unless otherwise indicated. Each of the referenced patents is incorporated herein by reference.

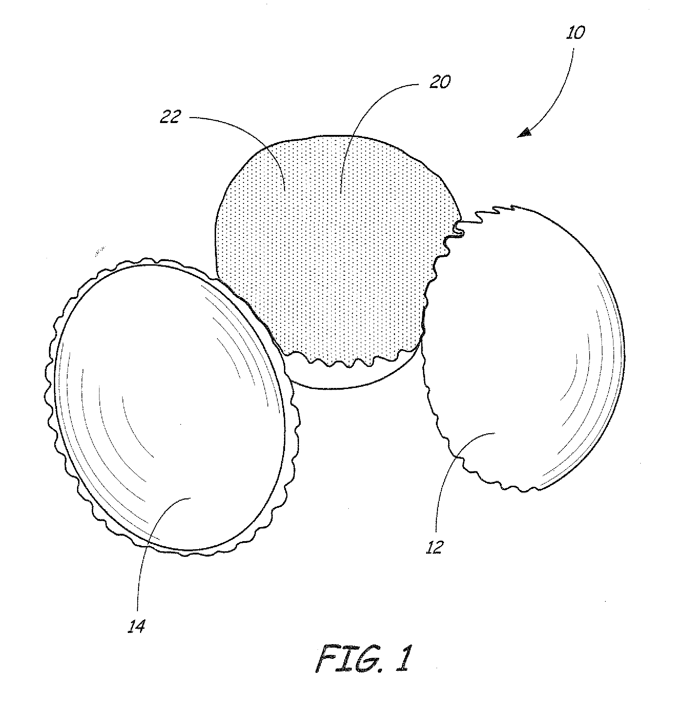

Referring now to Fig. 1, there is seen a cupcake topper of the present invention generally designated by reference numeral 10. The cupcake topper 10 can be seen to have a thin sheet or leaf construction having opposed major surfaces such as the outer or top major surface 12 and inner major surface or underside or bottom 14. In preferred form, the sheet has a curved or dome shaped surface to define an outer convex surface and an inner concave surface. The topper is pre-formed and is provided as a consumer packaged food article ready-to-use without spreading or forming into decorative shapes immediately upon removal from its packaging (not shown). The topper provides a novel, fast, and easy way to add a sweet frosting to cupcakes and other finished baked goods such as the cup-cake 20 depicted.

Cup-cake 20 can be seen to have a slightly rounded or concave or domed top exterior surface 22. The topper's dimensions and curvature of its shape are selected and adapted to mount upon the generally domed surface of cup-cake. The particular dimensions of diameter and axis height through the center of the concave surface will depend in part upon the diameter of the finished cup-cake or muffin. It will be appreciated that some cup-cakes or other baked goods are flat surfaced yet will nonetheless be beneficially used in connection with the present toppers notwithstanding the absence of a domed or irregular top surface. The amount of curvature of the topper and baked cake surface can differ slightly, since the residual heat from baking will melt the topper enough to conform to the surface enough to contact the entire cake after application.

In an even more preferred configuration, the toppers are round, 1 to 4 inches (∼2.5-10cm.) in diameter, and dome shaped, with a convex exterior top surface and a concave interior surface, which is in contact with the baked good. In one embodiment, the sphere segment 3-D shaped can be thickest in the center of the convex disk (i.e., at its center axis) and becoming thinner as the disk edges are approached. In another embodiment, the thickness of the topper is consistent from center to edge. In one variation, the topper is fabricated from a dried frosting or icing type confection formulation. In another variation, the topper is fabricated from a low moisture compound fat confection formulation. In one preferred form, the axis height ranges from 0.5-4 cm. preferably about 1-2.5 cm.

While in the present invention particular attention is paid to cup-cakes, the skilled artisan will appreciate that the present invention is likewise applicable to provide suitable shaped and sized toppers for use in connection with other shaped, sized and configured finished baked goods especially those having a circular and domed shape such as a muffin. The present invention also finds use in connection with baked goods that do not have a domed top surface but even planar or irregular top surfaces such as a cookie or round layer cake or brownies or other baked bar desserts. In still other variations, the finished baked good can have a rounded or even domed top surface but not having a circular peripheral shape such as a pound cake or quick bread that are traditionally in loaf form or even a layer cake baked in a square or rectangular pan.

Also, while the present invention finds particular suitability for use as a topping layer, the present articles can also be used as a filling or intermediate layer(s) in multi-layered finished baked goods.

Referring still to Fig. 1, it is seen that the underside or inner surface 14 of the topper 10 can be smooth to slightly rough. The shape of the bottom of the topper is designed to fit the rounded tops of cupcakes with about 50 to 90% contact between the topper 10 and the cupcake surface. The close contact of the two surfaces allows for heat transfer between the surfaces as the cup-cake cools after baking. When heat is present (either from the hot freshly baked cupcakes or provided by an external source such as a microwave oven) the topper softens slightly, conforms more fully to the cupcake surface, and adheres. For the frosting or icing embodiment, during that stage, the topper also absorbs moisture being released by the cooling cake, which tends to rehydrate the frosting layer to a more palatable and traditional texture. For the chocolate embodiment, moisture rehydration is not necessary for good function. Upon cooling, a frosted or iced finished baked good is prepared desirably exhibiting a high quality, even or uniform, visually appealing appearance.

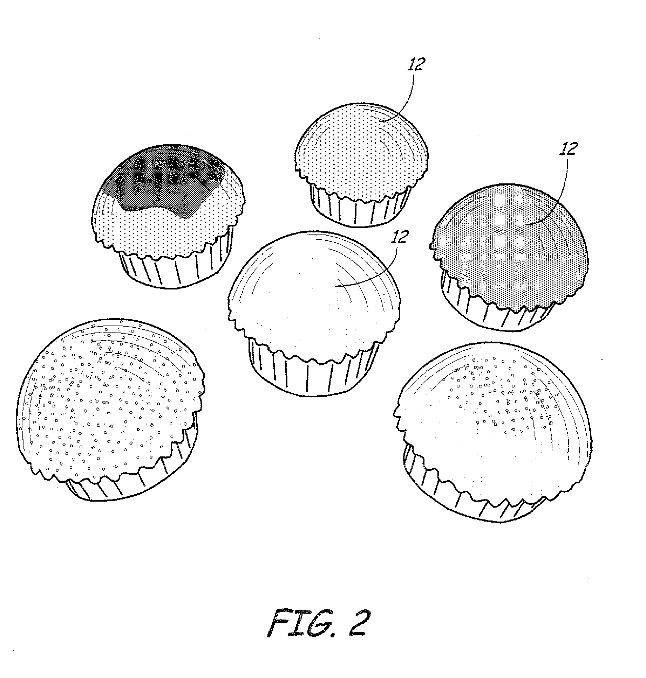

The top side 12 of the toppers can be smooth as shown in Fig. 1, or rough, or can contain 3-dimensional images or regular or irregular shapes such as swirls, twists, dimples, characters, etchings, mini-designs, or particulates leading to unlimited product variations. The toppers can additionally include pre-applied sprinkles for greater variation and ornamentation and thus visual appeal such as depicted in Fig. 2. The toppers can be of one uniform color or flavor or can include a multiplicity of colors and flavors. The toppers can also include a graphical image applied to its top surface 12.

The toppers range in thickness from 3 to 20mm and can vary from uniform thickness throughout to a design in which the central part of the topper is thickest, graduating to less thick further from the center, to thinnest at the perimeter. For example, in one embodiment, the topper has a middle thickness of ≈10mm gradually thinning or tapering to an edge thickness of ∼3mm. Such a construction minimizes potential run-off or dripping, or slide-off of the frosting when softened upon warming.

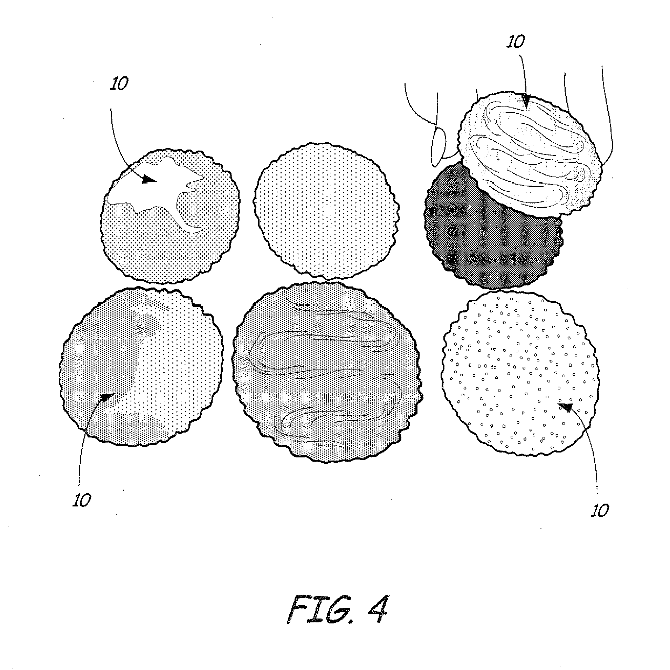

The periphery of the topper can also include an edging ornamental feature such as scalloping or the saw tooth feature depicted. Also, the topper can include various surface textures such as the swirls shown in Fig. 4. The topper can be supplied with a distinctive peak or top swirl feature.

The present pre-formed topper articles are provided to the consumer as rigid, dimensionally stable or self supporting, shaped forms at room temperatures and thus are to be distinguished from the formless or soft plastic mass of conventional shelf stable ready-to-spread frosting products.

The present articles are also shelf stable (i.e., having a water activity of less than about 0.7) and are intended to be distributed at room temperatures and thus do not require frozen storage distribution and sale and, when suitably packaged, provide a shelf life ranging from about 6-12 months. In preferred form, such articles are maintained at above frozen or refrigerated temperatures since the articles can become more brittle at such cold temperatures and can suffer breakage due to such brittleness.

However, the toppers are desirably fabricated from confection compositions that soften upon warming. Such softening upon warming is desirable to allow the toppers to deform from their initial preformed state to conform to the particular top surface of the finished baked good to which they are applied. It has been found herein that such confectionery compositions can be formulated that include a fat constituent having a melting point temperature of about 90 -150°F (∼32-65.5°C ). If the melting point of the frosting's fat constituent is too high, then the frosting can present an undesirable waxy mouth feel. If too low, then the product can too easily deform upon typical temperature exposure during normal distribution. Better results are obtained when the fat constituent's melting point temperature ranges from about 85-140°F (29.4 - 60°C). By virtue of the fat constituent, the topper will soften at approximately the same temperature as the melting point of its fat constituent.

Broadly, the toppers can include both un-aerated and aerated embodiments. Good results are obtained when the density ranges from ≈ 0.7-1.3g/cc. For example, the toppers can be fabricated from non-aerated, sugar based, fat containing, low moisture, icing confectionery or compound chocolate compositions having a density of about 1.2-1.3 g/cc. In another example, the frosting can be aerated to provide a frosting having a density of about 1.1 - 1.2 g/cc. Since the present topper articles are in a thin pre-formed sheet in one embodiment, non-aerated icing or compound fat compositions are preferred herein so as to better provide more robust less fragile structure. In other embodiments wherein a lighter eating texture is preferred even though the article is more fragile, a density ranging from about 0.8-1.15 g/cc. is preferred.

Distinctively, the present frosting articles are described as Ready-to-Use (RTU) frostings in that no additional preparation such as adding ingredients, preconditioning or even spreading is necessary. Thus, the present articles are to be distinguished from known ready-to-spread ("RTS") frosting products. RTS frostings form a discrete category of frostings because of their extended shelf lives compared to bakery frostings that are intended to be consumed while fresh and will age (dry, harden, or crack) within a few days. While known RTS frosting products provide convenience compared to from-scratch preparation, the present pre-formed frosting articles provide even greater convenience and ease of use. RTS frostings are contained in a solid walled package or tub due to their inherently deformable nature. A retail consumer of RTS frosting does not have the capability to make a preformed topper from retail product, without deformation and failure. Not only is the application of the frosting articles to a finished baked good more convenient but since no application tools are employed such as a spatula, clean-up is likewise reduced for even greater convenience and time savings.

The toppers can be stored in an aerated state unopened at room temperature for longer times (a one year shelf life target is typical). RTU frostings articles are applied directly from the container to a cake or other baked good with or without mixing or any other manipulative techniques.

RTU frostings articles are thus formulated so as to be usable without the addition of ingredients or other further preparation steps by the consumer.

Toppers can be made from a frosting or icing formula with the main ingredients comprising:

| **Ingredient** | **%** |
|---|---|
| Sugar(s) | 50 to 90%, |
| Shortening | 10 to 30%, |
| Moisture | 2 to 10% |

The formulae can also contain functional ingredients in the following amounts:

| **Ingredient** | **%** |
|---|---|
| Corn Syrup: | 0-40% |
| Emulsifiers: | 0-2% |
| Starches | 0-10% |
| Hydrocolloids: | 0.1-5% |
| Cocoa or chocolate: | 0-20% |
| Salt: | 1-2% |
| Milk or milk products: | 0-5% |
| Flavors/colors: | 0-5% |
| Preservatives: | 0-1% |
| Particulates: | 0-20% |

Toppers can be made in a variety of flavors, colors and textures and can carry particulates such as nuts, chips, coconut, candy bits, etc. Further, the topper technology allows for creativity in frosting design. Multicolored, multi-flavored, and multi-textured toppers can be made.

In one less preferred embodiment, the toppers can be fabricated from a chocolate formulation, especially a sweetened milk or dark chocolate formulation. In another variation, the toppers can be fabricated from a chocolate flavored sweetened compound fat formulation. Frosting or icing based formulation embodiments are preferred since such products are more tolerant to temperature abuse during normal sales distribution and storage. While not wishing to be bound by the proposed theory, it is speculated herein that the frosting or icing based products being structurally based on a sugar crystal matrix is more structurally robust during exposure to unintended heating during sales distribution.

### Method of Preparation

The method of preparing the present cupcake toppers can include a first step of forming a homogenous warm fluid confection capable of being charged to a two or three dimensional mold. In one variation, this step can include a first sub-step of combining the frosting ingredients at higher moisture levels and blending them in a large kettle until they are heated and mixed to form a homogenous warm fluid mixture. The warm frosting mixture can then be deposited into a mold and allowed to cool to set to form the toppers into predetermined shapes. The present methods can additionally include a step of drying the cooled shaped toppers to their final moisture content to form the present shelf stable firm pre-formed frosting articles. Such a step is particularly useful when using a frosting or icing composition. When using a chocolate or compound fat confectionery composition, such a drying step may be unnecessary.

Optionally, the present methods of preparation can include a step of aerating the composition prior to depositing into the mold. The level of aeration ranges from 0.7-1.3 grams/cc and more preferably 0.8-1.15 grams/cc before the drying process. In a second embodiment made with primarily fat, heated product deposited in a form will be cooled at a maximum temperature of 80°F (27°C).

In one embodiment, the drying step can be practiced in a drying chamber. In preferred form, the drying step is practiced at room or slightly elevated temperature to minimize exposure to excessive heat to prevent deformation of the pre-shaped frosting articles during the drying step. Good results are obtained when the temperature in the drying chamber ranges from about 70-90°F (21-32°C) and up to 120°F (49°C) toward the end of the drying process 70-120°F (21-49°C). In commercial practice, the dried low moisture finished pre-formed frosting articles can undergo a temperature/moisture equilibrium step prior to packaging.

The present pre-formed topper frosting articles can then be packaged in any suitable packaging arrangement to form the present packaged consumer food articles of the present invention. By virtue of their regular pre-formed shape, it is a surprising advantage of the present invention that the toppers articles are stackable. The packaging can preferably be selected to protect the shape of the toppers, protect against oxidation, and minimize breakage. In one embodiment, the package is re-sealable. In another embodiment, the topper articles are disposed or packaged in the form of a nested array within either a side tray or vertical tray to protect against physical assault. The package can also include sealing to protect the toppers against contamination and moisture exposure. For example, the toppers can be formed into a nested vertically stacked array and disposed within a canister having a removable top sealing membrane. The package can also include spacers or liners interposed between individual topper pieces to minimize their sticking to one another or to facilitate removal and use. In certain variations, each topper article can be separately packaged in its own membrane package and a multiplicity of such individually wrapped items disposed within a common container such as a canister or tray.

In addition to the trays or boxes of shaped pre-formed topper frosting articles, the trays can be provided with supplemental items such as a decorating kit, candy sprinkles, frosting tubes and the like so that the consumer can add additional decoration to the topped baked product.

It is to be appreciated that the packaged topper articles could either be sold as a stand-alone item or as part of a kit for making a frosted baked good involving the toppers and method of use instructions.

For example, in one embodiment, the present invention provides kits for the at-home consumer preparation of finished frosted dessert baked goods. The kits can include a first pouch of dry mix for layer cakes, cup-cakes, or other baked good. The kit can further include a package such as a side tray or canister disposed within which is a plurality of pre-formed topper articles such as in the form of a nested array. The kit optionally can include instructions for use by the consumer for practicing the present methods of use. For example, in one variation the kit can include a paperboard carton housing the pouch of dry mix ingredients for cup-cakes and a tray or canister of topper articles. The carton can include on one panel (such as its rear major face panel) printed instructions that include both text and graphics for instruction on use and preparation of finished frosted baked goods.

In another variation, the prepackaged food kit can be in the form of a tray for making or assembling frosted baked goods. This tray kit can comprise:
(a) a base tray defining at least one compartment;
(b) at least one compartment including a plurality or multiplicity of frosting toppers as a first food product;
(c) at least one compartment including a second food product in dried powder form intended to be reconstituted with a liquid, the tray kit intended to be stored without refrigeration and the second food product intended to be utilized with the first food product after being admixed with liquid and baked to form a baked good; and
(d) a top fitted and sealed to the base tray.

The present invention also includes methods of preparing a frosted baked good food product to enhance the food's flavor, appearance and appeal. The methods can include a step of providing a packaged food product comprising a plurality of toppers fabricated from a thermoplastic confectionery composition in sheet form. Preferably the toppers are applied while at room temperatures. The methods also can include the step of applying at least one sheeted topper article to a top surface of a finished baked good having a shape to form a topper coated baked good. The methods can further include a step of warming the topper coated baked goods to soften the confectionery composition. The warming step can be practiced employing a freshly baked dessert good still warm from the oven. It will be appreciated that in this variation, rather than the cooling period requiring a frustrating wait by the consumer, the cooling period employs the residual heat and evaporating moisture of the baked good to practice the warning and hydration step. In another variation, a previously prepared and room temperature baked good can be re-warmed (such as by microwave heating or reinsertion into a conventional oven) prior to applying the topper. Less preferably, the topper is applied to a cooled item and the combination re-warmed such as by microwave heating. This variation is less preferred since the topper article being in a thin sheet form and fabricated from a fat containing confectionery composition can absorb microwave energy so quickly as to melt and deform before the base baked good upon which it is mounted warms. This step can also be practiced while the baked good is still in its baking container or pan or after having been removed from its baking pan.

The method of use can further include a step of allowing the warmed softened topper article to conform to the top surface shape of the baked goods to form a finished baked dessert having a frosting layer conforming to the shape of the top surface shape.

Optionally, the preparation method can also include a step of allowing the warmed softened article to cool to room temperature to form a finished dessert baked good.

It will be appreciated that the above described method of use can be beneficially practiced by retail or commercial customers' bakery personnel as well as by consumers for at-home preparation of a finished frosted baked good such as a cup-cake dessert. For example, the toppers can be packaged so they are simply removed from a package and placed individually on hot cupcakes fresh from the oven. The heat from the cupcakes is transferred to the toppers causing them to melt, flow slightly and adhere to the surface of the cupcakes. As the cupcakes cool, the toppers set up resulting in finished frosted cupcakes. An alternative method of application would be to put the cupcake topper on a cool cupcake and place this item into the microwave for ≈ 10 seconds on high power.

Toppers are designed for use by consumers to provide a novel convenient means to frost cupcakes. The toppers provide surprising degrees of both versatility and convenience. They have further use in foodservice establishments to quickly frost large quantities of cupcakes. Using toppers on cupcakes eliminates the tedious and messy frosting process. An additional consumer benefit is that no clean-up is required unlike scratch preparation of a frosting or even when using a ready-to-spread consumer food product. Also, the present topper provides flexibility in use or application. For example, the toppers can be applied to freshly baked items while the baked item is warm and still in the baking utensil muffin pan. Alternatively, the same topper can also be used on a baked item after removal of baked items from the baking pan, but while still warm. Additionally the topper can be used by applying to a cooled baked goods with gentle reheating.

The invention contemplates toppers in a wider range of sizes and shapes used to ice, frost, or glaze cakes, muffins, and other baked or micro-waved products. The products can also be used as a filling or intermediate layer e.g., for a two layer cake by placing a first topper overlaying the bottom layer with a second topper overlaying the top layer to form a top layer of frosting.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A shelf stable sweet preformed, rigid or inflexible, three-dimensional frosting or icing article for use as a ready-to-use frosting layer for a finished baked good, comprising:
a thin rigid confectionery sheet fabricated from a dried confectionery composition, comprising:
a sugar(s) content of about 40 to 90%;
a shortening or fat content of about 10 to 30%;
a moisture content of about 0.5-10%;
having a thickness ranging from about 0.5-20 mm,
wherein the confectionery composition having a softening temperature ranging from ≈ 90-140°F (32-60°C).

2. The article of claim 1 wherein the sheet is in the form of a dome.

3. The article of claim 2 having a round periphery.

4. The article of claim 2 having a square or rectangular periphery.

5. The article of any of claims 1 to 4 having a uniform thickness.

6. The article of any of claims 1 to 5 having a piece weight ranging from about 10 to 40g.

7. The article of any of claims 2 to 6 having an axis height of about 10 to 20mm.

8. The article of any of claims 1 to 7 fabricated from a chocolate formulation.

9. The article of any of claims 1 to 8 wherein the confectionery composition comprises:
a sugar(s) content of about 50 to 90%;
a shortening or fat content of about 10 to 30%; and,
a moisture content of about 2-10%.

10. A pre-packaged shelf stable food product kit containing at least one of a first food product having a defined shape and a second food product in dried form intended to be reconstituted with a liquid and/or other ingredients, the kit intended to be stored without refrigeration and the second food product intended to be utilized with the first food product and baked to form a baked good, comprising:
an air-tight sealed container enclosing said first food product and said second food product, said container comprising:
a bottom portion defining an upwardly open area,
a plurality of side portions extending upwardly from the perimeter of said bottom portion, and
a removable top portion enclosing said first and second food products; said first food product being supported by said container so as to retain its shape during storage and handling of said container;
and said second food product being enclosed in a flexible sealed package positioned within said container;
wherein the first food product is a thin rigid confectionery sheet as disclosed in any of claims 1 to 9.

11. A pre-packaged shelf stable food product mix kit comprising:
an outer carton within which is a package of at least one of a first food product having a defined shape and useful as a cake topper and a second food product in dried form intended to be stored without refrigeration and the first food product intended to be utilized without further preparation and with the second food product after baking to form a baked good-for making or assembling a frosted ready-to-eat baked good, wherein the first food product is in the form of a thin rigid confectionery sheet as disclosed in any of claims 1 to 9.

12. The kit of claim 10 or 11 additionally including instruction for product preparation.

13. The kit of any of claims 10 to 12 wherein the second food product is a dry mix for forming a batter after being admixed with liquid.

14. The kit of claim 13 wherein the dry mix is for a cup-cake.

15. The kit of any of claims 10 to 14 wherein the first food item is in the form of a dome having a convex upper top surface and a concave lower surface and has a circular perimeter having a diameter of ∼2.5-10cm.
